# EUROPEAN PATENT APPLICATION

(11) **EP 0 710 545 A1**
(43) Date of publication of application: **08.05.1996**
(21) Application number: 95117445.7
(22) Date of filing: 06.11.1995
(51) Int. Cl.: B32B 27/30, B32B 17/10

(54) **An interlayer film for laminated glass and laminated glass using the same**

(30) Priority: 07.11.1994 JP 272215/94; 08.12.1994 JP 304811/94
(71) Applicant: SEKISUI CHEMICAL CO., LTD., Osaka-shi, Osaka-fu (JP)
(72) Inventor: Miyai, Jiro, Kouka-gun, Shiga-ken (JP)
(74) Representative: TER MEER - MÜLLER - STEINMEISTER & PARTNER

(57) **Abstract**

An interlayer film for laminated glass comprising a multi-layer resin film whose outmost resin film has a thickness of 45 micrometers or more to less than 200 micrometers wherein at least one side of said interlayer film has minute embossment with a roughness of 20-40 micrometers. Also an interlayer film for laminated glass comprising a multi-layer resin film whose outmost resin film has a thickness of 200 micrometers to 720 micrometers wherein at least one side of said interlayer film has minute embossment with a roughness of 20-50 micrometers. The laminated glass comprises the interlayer film for laminated glass sandwiched between two glass plates.

## Description

### Related Application

This application claims the priority of Japanese Patent applications No. 6-272215 filed on November 7, 1994 and No. 6-304811 filed on December 8, 1994, which are incorporeted here in by reference.

### Background of the Invention

### 1. Field of the Invention

This invention relates in general to an interlayer film for laminated glass and laminated glass which uses it.

### 2. The prior Art

Conventionally, laminated glass comprising an adhesive interlayer film typically made of plasticized polyvinyl butyral resin sandwiched between two transparent glass plates has been a safe glass material with high strength which is hard to break and, even when broken, does not scatter fragments. It is widely used for window glass for buildings and such, or for transportation equipment such as automobiles and aircraft.

Such laminated glass is manufactured by inserting an interlayer film made of adhesive thermoplastic resin between two glass plates, conducting a preliminary pressure adhesion on the obtained lamination to purge the air remaining between the layers, and conducting a full scale pressure adhesion for complete adhesion of the lamination.

For the interlayer film used in the laminated glass described above, the following characteristics are required: the so-called blocking phenomenon, in which the interlayer films stick together in clumps during storage, does not occur; workability when laminating the glass and the interlayer film is good; and the deaeration in the preliminary pressure adhesion process goes well. In particular, the quality of the glass is dependent on the deaeration during the preliminary pressure adhesion process. If the deaeration is insufficient, then the transparency of the obtained laminated glass may deteriorate and/or bubbles may develop in the acceleration test.

The total performance of the interlayer film, including the deaeration mentioned above, is dependent on the type and/or physical properties such as the visco-elasticity of the material which is a thermoplastic resin. However, as long as these physical properties are the same, the surface configuration of the interlayer film becomes a significant factor influencing total performance.

In particular, it is known that forming a large number of fine unevennesses called embossment on the surface of the interlayer film is effective, and interlayer films with embossment formed on their surfaces have been used. Examples of the form of the embossment include unevenness of random sizes and configurations and a large number of lattice-like grooves.

Examples of conventional interlayer films on the surface of which such embossment is formed include an interlayer film which has embossment with specific orientations on both sides (Japanese unexamined patent publication Tokkai Hei 6-127983). This one is known to have effects on the prevention of blocking between the interlayer films, improvements in workability when laminating the glass plates and the interlayer film as well as improvements in deaeration during the preliminary pressure adhesion process.

On the other hand, the applications of laminated glass have been diversified in recent years and higher added values on the laminated glass, such as ornamental quality, heat insulation and lamination processability, are now widely demanded. Because of this, it has become difficult to meet all of the requirements with an interlayer film with a single material, and multi-layer interlayer films made of multi-layer resin films, instead of single-layer interlayer films made of a single resin film, are drawing attention. For example, Japanese unexamined patent application Tokkai Hei 4-254444 proposes a multi-layer interlayer film(s) comprising at least two layers of multi-layer resin film made by laminating two types of plasticized polyvinyl acetal resin film.

However, if embossment is formed on the surface of the interlayer film described above for the prevention of blocking, improved workability or improved deaeration when the film thickness of the outmost resin film is relatively thin, then not only the embossment is formed on the surface of the interlayer film but also minute uneven deformations reflecting the unevenness of said embossment develops on the interface between each resin layer which makes up the multi-layer resin film. Because of this, minute disruptions develop on the interface between each resin film layer, making the interface non-uniform. As a result, there is a problem in that an object on the other side of the laminated glass made by using such a multi-layer interlayer film looks distorted, i.e. so-called optical distortion occurs.

### Brief Summary of the Invention

The object of the invention is to provide an interlayer film for laminated glass and laminated glass using it which prevent blocking between the interlayer films, have superior workability and deaeration and do not cause optical distortion.

The inventors, as a result of earnest research to solve the aforementioned problem, discovered that the image distortion which happens in multi-layer interlayer films for laminated glass, i.e. so-called optical distortion, had a significant correlation with the roughness of the embossment formed on the surface of the interlayer film, and thus completed the present invention.

The present invention provides an interlayer film for laminated glass comprising a multi-layer resin film whose outmost resin film has a thickness of 45 micrometers or more to less than 200 micrometers wherein at least one side of said interlayer film has minute embossments with a roughness of 20-40 micrometers.

The present invention provides an interlayer film for laminated glass comprising a multi-layer resin film whose outmost resin film has a thickness of 200 micrometers to 720 micrometers wherein at least one side of said interlayer film has minute embossments with a roughness of 20-50 micrometers.

The present invention provides the interlayer film for laminated glass wherein the multi-layer resin film is a lamination comprising at least one resin film (A) comprising a plasticizer and polyvinyl acetal resin (a) whose acetal group has a carbon number of 6-10 and at least one resin film (B) comprising a plasticizer and polyvinyl acetal resin (b) whose acetal group has a carbon number of 3-4.

The present invention provides the interlayer film for laminated glass wherein the multi-layer resin film for the interlayer is a lamination comprising at least one resin film (C) comprising a plasticizer and polyvinyl acetal resin (c) for which the acetal group has a carbon number of 4-6 and the average molar fraction of the ethylene group to which the acetyl group is bonded is 8-30 mol% of the total amount of ethylene group in the main chain and at least one resin film (D) comprising a plasticizer and polyvinyl acetal resin (d) for which the acetal group has a carbon number of 3-4 and the average molar fraction of the ethylene group to which the acetyl group is bonded is 4 mol% or less of the total amount of ethylene group in the main chain.

The present invention provides the interlayer film for laminated glass wherein the multi-layer resin film is a lamination comprising at least two plasticized polyvinyl butyral resin films and the difference in the average degree of polymerization of polyvinyl butyral used in the adjacent resin films is 300 to 4,500.

The present invention provides the interlayer film for laminated glass wherein the multi-layer resin film is a lamination comprising at least two plasticized polyvinyl butyral resin films and the difference between the plasticizer content in the adjacent resin films is 5 weight parts to 50 weight parts for 100 weight parts of the resin which makes up each resin film.

The present invention provides the interlayer film for laminated glass wherein the multi-layer resin film is a lamination containing a plasticized polyvinyl butyral resin film at least for the outmost resin film.

The present invention provides the interlayer film for laminated glass wherein the multi-layer resin film is a lamination comprising at least one resin film with a glass transition temperature of 15°C or lower.

The present invention provides laminated glass which comprises the above mentioned interlayer film sandwiched between two glass plates.

### Detailed Description

In the interlayer film for laminated glass of the present invention, the configuration of the embossment formed on the resin film made of the thermoplastic resin is not limited in particular and various configurations including cones, pyramids, pseudo-cone/pyramids, and columns such as prisms and cylinders can be adopted.

The base diameter or base length and/or the interval (pitch) of the embossments can be changed as necessary for the best combination of the deaeration properties (sealing; limit of air collection), workability (prevention of blocking between the interlayer films; adequate sliding between the interlayer film and the glass plates), etc. However, to avoid problems in outward appearance, it is preferable to have a smaller base diameter or base length, while it is preferable to have a larger pitch. In general, it is preferable to have a base diameter or base length in the range of 30-900 micrometers and a pitch in the range of 100-1,000 micrometers, but they are not particularly limited to these ranges.

However, the roughness of the embossment is limited by the film thickness of the outmost resin film. The "roughness of the embossment" mentioned here means the height of the embossment from the bottom to the top.

The interlayer film for laminated glass according to the invention has an outmost resin film of the multi-layer resin film with a film thickness of 45 micrometers to less than 200 micrometers, and the roughness of the embossment is limited to the range of 20-40 micrometers. If the roughness of the embossment is 20-40 micrometers when the film thickness of the outmost resin film is less than 45 micrometers, then minute disruptions occur on the interface between each resin film which make the interface non-uniform, causing so-called optical distortion. On the other hand, the roughness of the embossment is not limited to the range of 20-40 micrometers when the film thickness of the outmost resin film is 200 micrometers or more.

Another interlayer film for laminated glass according to the invention has an outmost resin film of the multi-layer resin film with a film thickness of 200 micrometers to 720 micrometers, and the roughness of the embossment is limited to the range of 20-50 micrometers. If the roughness of the embossment is over 40 micrometers but not over 50 micrometers when the film thickness of the outmost resin film is less than 200 micrometers, then minute disruptions occur on the interface between each resin film which make the interface non-uniform, causing so-called optical distortion. On the other hand, the roughness of the embossment is not limited to the range of 20-50 micrometers when the film thickness of the outmost resin film is more than 720 micrometers.

The arrangement of the embossments is not limited in particular and various regular or irregular arrangements can be adopted. In order to prevent the optical distortion due to disruptions on the interface, a regular arrangement of the embossments is preferable.

Examples of the method of forming the embossment on the surface of the interlayer film include the emboss-roll method, the calender-roll method and the profile extrusion method. The emboss-roll method is preferable for obtaining quantitatively constant embossment.

The film thickness of the interlayer film of laminated glass of the present invention is not limited in particular, but a preferable range is 0.1-2 mm for best results in various applications.

For the resin film used in the present invention, resin films conventionally used for laminated glass can be used. Examples include plasticized polyvinyl butyral resin films, vinyl chloride resin films, ethylene-vinyl acetate resin films and urethane resin films. These resin films have superior basic properties required of laminated glass including weather resistance, resistance against piercing, the ability to prevent scattering of glass fragments, transparency and the prevention of the optical distortion. These resin films can contain, or have on the surface, various additives including ultraviolet light absorbents, antioxidant and adhesive power control agents.

The resin film used in the interlayer film may be a lamination of at least one resin film (A) comprising a plasticizer and polyvinyl acetal resin (a) whose acetal group has a carbon number of 6-10 and at least one resin film (B) comprising a plasticizer and polyvinyl acetal resin (b) whose acetal group has a carbon number of 3-4.

The resin film described above is not only superior in the basic properties required of laminated glass including weather resistance, resistance against piercing, the ability to prevent the scattering of glass fragments and transparency, but also particularly superior in terms of sound insulation.

The polyvinyl acetal resin whose acetal groups has a carbon number of 6-10 is obtained by using aldehyde with a carbon number of 6-10 to acetalize polyvinyl alcohol. It usually has an acetal group (s), acetyl group(s) and hydroxyl group(s) on the ethylene group(s) in the main chain.

For the aldehyde with a carbon number of 6 -10 which is used to obtain the polyvinyl acetal resin (a) whose acetal group has a carbon number of 6-10, aliphatic, aromatic or alicyclic aldehydes including n-hexylaldehyde, 2-ethylbutyraldehyde, n-heptylaldehyde, n-octylaldehyde, n-nonylaldehyde, n-decylaldehyde and benzaldehyde, cinnamaldehyde are used independently or in combination.

If the carbon number of the aldehyde is less than 6, then sufficient sound insulation may not be achieved. If the carbon number is more than 10, then the resin synthesis often becomes difficult due to reasons such as poor reactivity in the acetalization of the aldehyde and proneness to blocking during the reaction. n-hexylaldehyde, n-octylaldehyde and 2-ethylbutyraldehyde with a carbon number of 6-8, independently or in combination, are more preferably used for the aldehyde.

For the aldehyde with a carbon number of 3 -4 which is used to obtain the polyvinyl acetal resin (b) whose acetal group has a carbon number of 3-4, propionaldehyde, n-butyraldehyde, isobutyraldehyde, etc. are used independently or in combination.

The resin film used for the interlayer film may be a lamination comprising at least one resin film (C) comprising a plasticizer and polyvinyl acetal resin (c) for which the acetal group has a carbon number of 4-6 and the average molar fraction of the ethylene group to which the acetyl group is bonded is 8-30 mol% of the total amount of ethylene group in the main chain and at least one resin film (D) comprising a plasticizer and polyvinyl acetal resin (d) for which the acetal group has a carbon number of 3-4 and the average molar fraction of the ethylene group to which the acetyl group is bonded is 4 mol % or less of the total amount of ethylene group in the main chain.

The resin film described above is not only superior in the basic properties required of laminated glass including weather resistance, resistance against piercing, the ability to prevent the scattering of glass fragments and transparency, but also particularly superior in terms of sound insulation.

For the aldehyde with a carbon number of 4 -6 which is used to obtain polyvinyl acetal resin (c) whose acetal group has a carbon number of 4-6, n-butyraldehyde, isobutyraldehyde, valeraldehyde, n-hexylaldehyde, 2-ethylbutyraldehyde, etc. are used independently or in combination.

If the carbon number of the aldehyde is less than 4, then sufficient sound insulation may not be achieved. If the carbon number is more than 6, then the reactivity in the acetalization of the aldehyde may be poor.

For the aldehyde with a carbon number of 3 -4 which is used to obtain polyvinyl acetal resin (d) whose acetal group has a carbon number of 3-4, propionaldehyde, n-butyraldehyde, isobutyraldehyde, etc. are used independently or in combination.

In polyvinyl acetal resin (c), the average molar fraction of the ethylene group with which an acetyl group(s) is connected in the total amount of ethylene group in the main chain, hereafter refered to "an amount of the remaining acetyl group", is limited to 8-30 mol%. This is because if it is less than 8 mol%, then sufficient sound insulation cannot be achieved, and if it is more than 30 mol%, then the reactivity of the aldehyde is significantly reduced. In the polyvinyl acetal resin (c), an amount of the remaining acetyl group is more preferabley 10-24 mol% of the total amount of ethylene group in the main chain.

In polyvinyl acetal resin (d), an amount of the remaining acetyl group is limited to 4 mol% or les. This is because if it is more than 4 mol%, then the difference with the amount of the remaining acetyl group of polyvinyl acetal resin (c) is too small for good sound insulation. A more preferable value of the amount of the acetyl group in polyvinyl acetal resin (d) is 2 mol% or less.

For aldehyde used for obtaining polyvinyl acetal resin (c) and (d), it is particularly preferable to use n-butyraldehyde. Use of n-butyraldehyde enhances the adhesion strength between the layers composing the laminated film, and the polyvinyl butyral resin can be obtained with the same conventional synthetic method as for butyral resin.

The multi-layer resin film used for the interlayer film may be a lamination comprising at least two plasticized polyvinyl butyral resin films and the difference in the average degree of polymerization of polyvinyl butyral used in the adjacent resin films is 300 to 4,500.

The resin film described above is superior in terms of the basic properties required of laminated glass including weather resistance, resistance against piercing, the ability to prevent the scattering of glass fragments and transparency. It is particularly superior in resistance against piercing.

The difference in the average degree of polymerization of polyvinyl butyral used in the adjacent resin film described above must be in the range of 300 to 4,500. If the difference in the average degree of polymerization is less than 300, then the visco-elastic characteristics become similar between the adjacent resin films and less striking energy is absorbed in the interface, making it impossible to achieve superior piercing resistance. On the other hand, the average degree of polymerization of the polyvinyl butyral resin used in each resin film should preferably be 500-5,000. If the average degree of polymerization is less than 500, then the rigidity of said resin film decreases significantly, resulting in a reduction in the piercing resistance of the laminated glass. On the other hand, if the average degree of polymerization exceeds 5,000, then the formability deteriorate. Therefore, the difference in the average degree of polymerization of polyvinyl butyral used in the adjacent resin films is 4,500 or less. A more preferable range of the difference in the average degree of polymerization is 500-3,500.

The resin film used for the interlayer film may be a lamination which has a plasticized polyvinyl butyral resin film at least for the outmost resin film. It is sufficient to have the plasticized polyvinyl butyral resin at least on one side, but it is preferable to have it on both sides for a greater effect.

The resin film described above is superior in terms of the basic properties required of laminated glass including weather resistance, resistance against piercing, the ability to prevent the scattering of glass fragments and transparency. It is particularly superior in resistance against piercing. It is also superior in features with regard to handling such as lamination processability and anti-blocking properties.

The average degree of polymerization of the polyvinyl butyral resin used in the resin film described above should preferably be 500-5,000. If the average degree of polymerization is less than 500, then the rigidity of said resin film decreases significantly, resulting in a reduction in the piercing resistance of the laminated glass. On the other hand, if the average degree of polymerization exceeds 5,000, then the formability deteriorate. The amount of the remaining acetyl group in the polyvinyl butyral resin should preferably be 30 mol% or less. If the amount of the remaining acetyl group exceeds 30 mol%, then the reactivity of the aldehyde in the manufacturing process of the resin is reduced and it may not be possible to obtain a resin with the target composition.

In general, the average degree of butyralization of the polyvinyl butyral resin used for the resin film described above should preferably be 40-75 mol %. If the average degree of butyralization of the resin is less than 40 mol%, then compatibility with the plasticizer deteriorates, making it harder to mix in the sufficient amount of plasticizer necessary for adequate piercing resistance. On the other hand, it requires a long reaction time to obtain a resin with an average degree of butyralization over 75 mol%, and it is not preferable to do this from a process engineering point of view.

The multi-layer resin film used for the interlayer film may be a lamination comprising at least two plasticized polyvinyl butyral resin films and the difference in the plasticizer content in the adjacent resin films is 5 weight parts to 50 weight parts for 100 weight parts of the resin which makes up each resin film.

The difference in the plasticizer content in the adjacent resin film described above must be in the range of 5 weight parts to 50 weight parts for 100 weight parts of the resin which makes up each film. If the difference in the plasticizer content is less than 5 weight parts, then the visco -elastic characteristics become similar between the adjacent resin films and less striking energy is absorbed in the interface, making it impossible to achieve superior piercing resistance. On the other hand, the plasticizer content of each resin film should preferably be 20-70 weight parts. If the plasticizer content is less than 20 weight parts, then said resin film becomes exceedingly highly synthesized, resulting in a reduction in the piercing resistance of the laminated glass. On the other hand, if the plasticizer content exceeds 70 weight parts, then the plasticizer oozes out and affects adhesion of the laminated glass and such. Therefore, the difference in the plasticizer content in the adjacent resin films must be 50 weight parts or less.

For the plasticizer used in the interlayer film for laminated glass and for the plasticizer used to obtain the plasticized polyvinyl butyral resin, organic plasticizers including monobasic acid esters and polybasic acid esters and phosphoric acid type plasticizers including organic phosphoric acid types and organic phosphorus acid types are used.

The resin film used for the interlayer film may be a lamination comprising at least one layer of a resin film with a glass transition temperature of 15°C or lower.

The resin film described above is superior in terms of sound insulation, which is one of the highly value-added features demanded of laminated glass in recent years.

The glass transition temperature (Tg) of the resin film described above must be 15°C or lower, and a more preferable range of Tg is -20°C to 15°C. If the Tg of the resin film exceeds 15°C, then sufficient sound insulation cannot be obtained. It is not preferable if the Tg is lower than -20°C because then sufficient sound insulation cannot be obtained over a wide temperature range.

These resin films can contain, or have on the surface, various additives including ultraviolet light absorbents, antioxidants and adhesive power control agents.

An example of the method of manufacturing the interlayer film for laminated glass of the present invention comprises forming each resin film separately, stacking these resin films and unifying them by applying heat and pressure, and then forming the embossment on the surface, and another example comprises using the multi-layer extrusion method to form and laminate the resin films as one unit, and then forming the embossment on the surface.

For manufacturing the laminated glass using the interlayer film thus obtained, a conventional method of manufacturing laminated glass is adopted. For example, the interlayer film described above is sandwiched between two transparent inorganic glass plates or organic glass plates such as polymethyl methacrylate plates or polycarbonate plates with a high rigidity, the resulting sandwich is put into a rubber bag and the preliminary pressure adhesion is conducted at approximately 70-110°C with decompression by means of suction, and then using an autoclave, or using a press molding machine, the full scale pressure adhesion is conducted at approximately 120 -150°C with a pressure of 10-15 kg/cm².

The distortion of images seen through the laminated glass due to minute disruptions on the interface between each resin layer which occur in multi-layer interlayer films for laminated glass, i.e. the so-called optical distortion phenomenon, has a significant correlation with the roughness of the embossment formed on the interlayer film. In particular, the relatively thin multi-layer interlayer film of Claim 1 of the present invention, with a film thickness of the outmost resin film of 45 micrometers to less than 200 micrometers, has the interface between each resin film layer close to the surface of the interlayer film, and therefore disruption of the interface tends to occur when forming the embossment on the surface. A similar statement can be made for the multi-layer interlayer film of Claim 2 of the present invention, with a film thickness of the outmost resin film of 200 micrometers to less than 720 micrometers.

In the present invention, the roughness of the embossment formed on at least one side of said interlayer film is limited to the range of 20-40 micrometers in Claim 1 and to the range of 20-50 micrometers in Claim 2 and therefore the disruptions on the interface between each resin film layer which used to occur when the embossment was formed on the surface of the interlayer film do not occur anymore and the interface is uniform. Therefore, when laminated glass is manufactured using this interlayer film, optical distortion does not occur. Also, the blocking between the interlayer films can be prevented, and good results can be obtained regarding workability and deaeration. By specifying the material of the multi-layer resin film it is possible to obtain laminated glass with superior sound insulation in addition to prevention of the optical distortion and the blocking between the interlayer films as well as improvements in workability and deaeration.

### Examples

Examples and Comparative examples of the present invention are shown below and further details of the present invention are described. The present invention is not limited to these examples.

For the glass transition temperature of the interlayer film, a visco-elastic spectrometer was used to measure the visco-elasticity over a wide temperature range at a frequency of 10 Hz, and the glass transition temperature was defined as the temperature where the loss tangent, tan δ , which is a ratio G''/G' of the storage elastic modulus G' and the loss elastic modulus G'', was at its maximum. The interlayer films for laminated glass obtained in Examples and Comparative Examples were tested for their blocking properties, and laminated glass prepared by using them was tested for the deaeration and optical distortion. The evaluation methods are shown below.

### [Evaluation method of the blocking properties]

The obtained interlayer film for laminated glass was cut into two rectangular pieces with the dimensions of 10 mm x 25 mm and the pieces were stacked together. The stack was loaded with a 2 kg weight and let stand for 25 hours, and the 180 degree peel -off force (an average of n samples with n = 3) was measured using a tensile tester. The larger the measured value, the larger the adhesive strength, and therefore the worse the anti-blocking properties.

### [Evaluation method of the deaeration and optical distortion]

The evaluation of the deaeration and optical distortion were conducted visually.

### [Evaluation method of the noise insulation properties]

The obtained laminated glass was cut into sample pieces. The sample pieces were agitated in a vibrator ("G21-005D" from Shinkensha Co., Ltd.). The obtained signals of vibration properties of the sample pieces were amplified by a mechanical impedance amplifier ("XG-81" from Rion, Ltd.) and analyzed by a FFT analyzer ("FFT spectrum analyzer HP 3582A" from Yokogawa-Hewlett-Packard, Ltd.).

Graphs which show relations between noise frequency and noise transmission loss at 20°C were drawn from a ratio of a loss factor obtained by the above analysis with the resonance frequency with glass. Then, the minimum transmission loss (TL) was calculated for evaluation of the noise insulation properties of the obtained laminated glass.

### (Example 1)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film A (film thickness 0.13 mm).

100 weight parts of vinyl chloride-type resin (PVC resin: copolymer of vinyl chloride-ethylene -glycidyl methacrylate) and 40 weight parts of di -2-ethylhexyl phthalate, for the plasticizer, were mixed and thoroughly melted and kneaded using a mixing roll, followed by press molding using a press molding machine, to obtain a resin film with an average film thickness of 0.12 mm. The obtained resin film was designated as resin film B (film thickness 0.12 mm).

### [Preparation of the interlayer film for laminated glass]

Resin film A (film thickness 0.13 mm) and resin film B (film thickness 0.12 mm) described above were used to make a stack of resin film A (film thickness 0.13 mm)/resin film B (film thickness 0.12 mm)/resin film A (film thickness 0.13 mm), in this order, for a total of 3 layers (total film thickness 0.38 mm) and heated pressure adhesion was conducted using a press molding machine to obtain a multi-layer interlayer film. The emboss-roll method was used to form embossment on the surface of the obtained interlayer film to prepare the interlayer film for laminated glass. The roughness of the embossment obtained interlayer film, measured by using tracing surface roughness meters (Surfcom E-RM-S09A, E-RM-S02A and E-MD-S39A from Tokyo Seimitsu Co., Ltd.), was 30 micrometers. For the blocking properties, the measured adhesive strength was 85 g/cm, which was low. This indicated that the anti-blocking properties were good and hence workability was superior.

### [Preparation of the laminated glass]

The interlayer film for laminated glass described above was sandwiched between transparent float glass plates (height 30 cm x width 30 cm x thickness 3 mm), the resulting sandwich was put into a rubber bag, and deaeration was conducted for 20 minutes in a 20 torr vacuum. In this deaerated state, it was then transferred to an oven and vacuum-pressed at 90°C for 30 minutes. After completing this preliminary pressure adhesion process, full-scale pressure adhesion was conducted on the laminated glass using an air -type autoclave at 135°C for 20 minutes with a pressure of 12 kg to prepare the laminated glass. The laminated glass thus obtained was evaluated for the deaeration and optical distortion. The result was good for both items: i.e. the deaeration was superior and no optical distortion occurred.

### (Example 2)

### [Preparation of each resin film]

The average film thickness of resin film A (film thickness 0.13 mm) in Example 1 was changed to 0.19 mm to prepare resin film A (film thickness 0.19 mm). 100 weight parts of polyurethane resin (PU resin: copolymer of 4,4-diisocyanatedicyclohexylmethane and polytetramethylene glycol) was thoroughly melted and kneaded using a mixing roll, followed by press molding using a press molding machine, to obtain a resin film with an average film thickness of 0. 38 mm. The obtained resin film was designated as resin film C (film thickness 0.38 mm).

### [Preparation of the interlayer film for laminated glass]

Resin film A (film thickness 0.19 mm) and resin film C (film thickness 0.38 mm) described above were used to make a stack of resin film A (film thickness 0.19 mm)/resin film C (film thickness 0.38 mm)/resin film A (film thickness 0.19 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 38 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 3)

### [Preparation of each resin film]

The average film thickness of resin film A (film thickness 0.13 mm) in Example 1 was changed to 0.19 mm to prepare resin film A (film thickness 0.19 mm). Also, the average film thickness of resin film B (film thickness 0.12 mm) was changed to 0.19 mm to prepare resin film B (film thickness 0.19 mm).

### [Preparation of the interlayer film for laminated glass]

Resin film A (film thickness 0.19 mm) and resin film B (film thickness 0.19 mm) described above were used to make a stack of resin film A (film thickness25 0.19 mm)/resin film B (film thickness 0.19 mm) for a total of 2 layers (total film thickness 0.38 mm) and the rest of the process was conducted in the same manner as in Example 1 to obtain the inter layer film for laminated glass. The roughness of the embossment of the obtained interlayer film, measured in the same manner as in Example 1, was 35 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 4)

### [Preparation of each resin film]

The average film thickness of resin film A (film thickness 0.13 mm) in Example 1 was changed to 0.09 mm to prepare resin film A (film thickness 0.09 mm). Also, the average film thickness of resin film B (film thickness 0.12 mm) was changed to 0.20 mm to prepare resin film B (film thickness 0.20 mm).

### [Preparation of the interlayer film for laminated glass]

Resin film A (film thickness 0.09 mm) and resin film B (film thickness 0.20 mm) described above were used to make a stack of resin film A (film thickness 0.09 mm)/resin film B (film thickness 0.20 mm)/resin film A (film thickness 0. 09 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 25 micrometers. For the blocking properties, the measured adhesive strength was 90 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 5)

### [Preparation of each resin film]

The average film thickness of resin film A (film thickness 0.13 mm) in Example 1 was changed to 0.05 mm to prepare resin film A (film thickness 0.05 mm). Also, the average film thickness of resin film B (film thickness 0.12 mm) was changed to 0.09 mm to prepare resin film B (film thickness 0.09 mm). The average film thickness of resin film C (film thickness 0.38 mm) in Example 2 was changed to 0.19 mm to prepare resin film C (film thickness 0.19 mm).

### [Preparation of the interlayer film for laminated glass]

Resin film A (film thickness 0.05 mm), resin film B (film thickness 0.09 mm) and resin film C (film thickness 0.19 mm) described above were used to make a stack of resin film A (film thickness 0.05 mm)/resin film C (film thickness 0.19 mm)/resin film A (film thickness 0.05 mm)/resin film B (film thickness 0.09 mm) for a total of 4 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 95 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Comparative Example 1)

### [Preparation of each resin film and preparation of the interlayer film for laminated glass]

The interlayer film for laminated glass was obtained in the same manner as in Example 1 except for the fact that the roughness of the embossment, which was 30 micrometers in Example 1, was changed to 43 micrometers. For the blocking properties of the obtained interlayer film, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. Although the deaeration was superior, optical distortion occurred and therefore the result was poor.

### (Comparative Example 2)

### [Preparation of each resin film and preparation of the interlayer film for laminated glass]

The interlayer film for laminated glass was obtained in the same manner as in Example 1 except for the fact that the roughness of the embossment, which was 30 micrometers in Example 1, was changed to 22 micrometers. For the blocking properties of the obtained interlayer film, the measured adhesive strength was 170 g/cm, which was high. This indicated that the anti-blocking properties were poor and hence workability was inferior.

### [Preparation of the laminated glass]

The laminated glass was prepared in the same manner as in Example 1. The laminated glass thus obtained was evaluated for the deaeration and optical distortion. As a result, transparency was insufficient, and the deaeration was defective. On the other hand, optical distortion did not occur.

### (Comparative Example 3)

### [Preparation of each resin film]

The average film thickness of resin film A (film thickness 0.13 mm) in Example 1 was changed to 0.04 mm to prepare resin film A (film thickness 0.04 mm). Also, the average film thickness of resin film B (film thickness 0.12 mm) was changed to 0.30 mm to prepare resin film B (film thickness 0.30 mm).

### [Preparation of the interlayer film for laminated glass]

Resin film A (film thickness 0.04 mm) and resin film B (film thickness 0.30 mm) described above were used to make a stack of resin film A (film thickness 0.04 mm)/resin film B (film thickness 0.30 mm)/resin film A (film thickness 0.04 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 35 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. Although the deaeration was superior, optical distortion occurred and therefore the result was poor.

The results of Examples 1-5 and Comparative Examples 1-3 are summarized in Table 1.

**Table 1**

| | | | Examples | | | | | Comparative examples | | |
|---|---|---|---|---|---|---|---|---|---|---|
| | | | 1 | 2 | 3 | 4 | 5 | 1 | 2 | 3 |
| Resin film | A | Type | PVB | PVB | PVB | PVB | PVB | PVB | PVB | PVB |
| | | Film thickness (mm) | 0.13 | 0.19 | 0.19 | 0.09 | 0.05 | 0.13 | 0.13 | 0.04 |
| | B | Type | PVC | | PVC | PVC | PVC | PVC | PVC | PVC |
| | | Film thickness (mm) | 0.12 | | 0.19 | 0.20 | 0.09 | 0.12 | 0.12 | 0.30 |
| | C | Type | | PU | | | PU | | | |
| | | Film thickness (mm) | | 0.38 | | | 0.19 | | | |
| Interlayer film | Lamination configuration | | ABA | ACA | AB | ABA | ACAB | ABA | ABA | ABA |
| | Number of layers | | 3 | 3 | 2 | 3 | 4 | 3 | 3 | 3 |
| | Total film thickness (mm) | | 0.38 | 0.76 | 0.38 | 0.38 | 0.38 | 0.38 | 0.38 | 0.38 |
| | Roughness of the embossment (µm) | | 30 | 38 | 35 | 25 | 22 | 43 | 18 | 35 |
| | Blocking properties (g/cm) | | 85 | 80 | 80 | 90 | 95 | 80 | 170 | 80 |
| Laminated glass | Deaeration | | Good | Good | Good | Good | Good | Good | Poor | Good |
| | Optical distortion | | Good | Good | Good | Good | Good | Poor | Good | Poor |
| Total assessment | | | ○ | ○ | ○ | ○ | ○ | X | X | X |

### (Example 6)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.32 mm. The obtained resin film was designated as resin film D (film thickness 0.32 mm).

100 weight parts of vinyl chloride-type resin (PVC resin: copolymer of vinyl chloride-ethylene -glycidyl methacrylate) and 40 weight parts of di -2-ethylhexyl phthalate, for the plasticizer, were mixed and thoroughly melted and kneaded using a mixing roll, followed by press molding using a press molding machine, to obtain a resin film with an average film thickness of 0.12 mm. The obtained resin film was designated as resin film E (film thickness 0.12 mm).

### [Preparation of the interlayer film for laminated glass]

Resin film D (film thickness 0.32 mm) and resin film E (film thickness 0.12 mm) described above were used to make a stack of resin film D (film thickness 0.32 mm)/resin film E (film thickness 0.12 mm)/resin film D (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 84 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 7)

### [Preparation of each resin film]

The average film thickness of resin film D (film thickness 0.32 mm) in Example 6 was changed to 0.71 mm to prepare resin film D (film thickness 0.71 mm). 100 weight parts of polyurethane resin (PU resin: copolymer of 4,4-diisocyanatedicyclohexylmethane and polytetramethylene glycol) was thoroughly melted and kneaded using a mixing roll, followed by press molding using a press molding machine, to obtain a resin film with an average film thickness of 0.10 mm. The obtained resin film was designated as resin film F (film thickness 0.10 mm).

### [Preparation of the interlayer film for laminated glass]

Resin film D (film thickness 0.71 mm) and resin film F (film thickness 0.10 mm) described above were used to make a stack of resin film D (film thickness 0.71 mm)/resin film F (film thickness 0.10 mm)/resin film D (film thickness. 0.71 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 48 micrometers. For the blocking properties, the measured adhesive strength was 65 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 8)

### [Preparation of each resin film]

The average film thickness of resin film D (film thickness 0.32 mm) in Example 6 was changed to 0.38 mm to prepare resin film D (film thickness 0.38 mm). Also, the average film thickness of resin film E (film thickness 0.12 mm) was changed to 0.38 mm to prepare resin film E (film thickness 0.38 mm).

### [Preparation of the interlayer film for laminated glass]

Resin film D (film thickness 0.38 mm) and resin film E (film thickness 0.38 mm) described above were used to make a stack of resin film D (film thickness 0.38 mm)/resin film E (film thickness 0.38 mm) for a total of 2 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 45 micrometers. For the blocking properties, the measured adhesive strength was 70 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 9)

### [Preparation of each resin film]

The average film thickness of resin film D (film thickness 0.32 mm) in Example 6 was changed to 0.26 mm to prepare resin film D (film thickness 0.26 mm). Also, the average film thickness of resin film E (film thickness 0.12 mm) was changed to 0.24 mm to prepare resin film E (film thickness 0.24 mm).

### [Preparation of the interlayer film for laminated glass]

Resin film D (film thickness 0.26 mm) and resin film E (film thickness 0.24 mm) described above were used to make a stack of resin film D (film thickness 0.26 mm)/resin film E (film thickness 0.24 mm)/resin film D (film thickness 0.26 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 25 micrometers. For the blocking properties, the measured adhesive strength was 90 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 10)

### [Preparation of each resin film]

The average film thickness of resin film D (film thickness 0.32 mm) in Example 6 was changed to 0.20 mm to prepare resin film D (film thickness 0.20 mm). Also, the average film thickness of resin film E (film thickness 0.12 mm) was changed to 0.25 mm to prepare resin film E (film thickness 0.25 mm). The average film thickness of resin film F (film thickness 0.10 mm) in Example 7 was changed to 0.11 mm to prepare resin film F (film thickness 0.11 mm).

### [Preparation of the interlayer film for laminated glass]

Resin film D (film thickness 0.20 mm), resin film E (film thickness 0.25 mm) and resin film F (film thickness 0.11 mm) described above were used to make a stack of resin film D (film thickness 0.20 mm)/resin film F (film thickness 0.11 mm)/resin film D (film thickness 0.20 mm)/resin film E (film thickness 0.25 mm) for a total of 4 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 96 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Comparative Example 4)

### [Preparation of each resin film and preparation of the interlayer film for laminated glass]

The interlayer film for laminated glass was obtained in the same manner as in Example 6 except for the fact that the roughness of the embossment, which was 30 micrometers in Example 6, was changed to 53 micrometers. For the blocking properties of the obtained interlayer film, the measured adhesive strength was 60 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. Although the deaeration was superior, optical distortion occurred and therefore the result was poor.

### (Comparative Example 5)

### [Preparation of each resin film and preparation of the interlayer film for laminated glass]

The interlayer film for laminated glass was obtained in the same manner as in Example 6 except for the fact that the roughness of the embossment, which was 30 micrometers in Example 6, was changed to 18 micrometers. For the blocking properties of the obtained interlayer film, the measured adhesive strength was 170 g/cm, which was high. This indicated that the anti-blocking properties were poor and hence workability was inferior.

### [Preparation of the laminated glass]

The laminated glass was prepared in the same manner as in Example 1. The laminated glass thus obtained was evaluated for the deaeration and optical distortion. As a result, the deaeration was defective. And, although optical distortion did not occur, transparency was insufficient.

The results of Examples 6-10 and Comparative Examples 4-5 are summarized in Table 2.

**Table 2**

| | | | Examples | | | | | Comparative examples | |
|---|---|---|---|---|---|---|---|---|---|
| | | | 6 | 7 | 8 | 9 | 10 | 4 | 5 |
| Resin film | D | Type | PVB | PVB | PVB | PVB | PVB | PVB | PVB |
| | | Film thickness (mm) | 0.32 | 0.71 | 0.38 | 0.26 | 0.20 | 0.32 | 0.32 |
| | E | Type | PVC | | PVC | PVC | PVC | PVC | PVC |
| | | Film thickness (mm) | 0.12 | | 0.38 | 0.24 | 0.25 | 0.12 | 0.12 |
| | F | Type | | PU | | | PU | | |
| | | Film thickness (mm) | | 0.10 | | | 0.11 | | |
| Interlayer film | Lamination configuration | | DED | DEF | DE | DED | DFDE | DED | DED |
| | Number of layers | | 3 | 3 | 2 | 3 | 4 | 3 | 3 |
| | Total film thickness (mm) | | 0.76 | 1.52 | 0.76 | 0.76 | 0.76 | 0.76 | 0.76 |
| | Roughness of the embossment (µm) | | 30 | 48 | 45 | 25 | 22 | 53 | 18 |
| | Blocking properties (g/cm) | | 84 | 65 | 70 | 90 | 96 | 60 | 170 |
| Laminated glass | Deaeration | | Good | Good | Good | Good | Good | Good | Poor |
| | Optical distortion | | Good | Good | Good | Good | Good | Poor | Good |
| Total assessment | | | ○ | ○ | ○ | ○ | ○ | X | X |

### (Example 11)

### [Preparation of each resin film]

100 weight parts of polyvinyl acetal resin (carbon number of acetal group: 6, degree of polymerization: 1,700, amount of remaining acetyl group: 0.9 mol% and degree of acetalization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film G (film thickness 0.12 mm).

100 weight parts of polyvinyl butyral resin (PVB resin: degree of polymerization: 1,700, amount of remaining acetyl group: 0.9 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film H (film thickness 0.13 mm).

### [Preparation of the interlayer film for laminated glass]

Resin film G (film thickness 0.12 mm) and resin film H (film thickness 0.13 mm) described above were used to make a stack of resin film resin film H (film thickness 0.13 mm)/G (film thickness 0.12 mm)/resin film H (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 31 micrometers. For the blocking properties, the measured adhesive strength was 83 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 12)

### [Preparation of each resin film]

100 weight parts of polyvinyl acetal resin (carbon number of acetal group: 8, degree of polymerization: 1,700, amount of remaining acetyl group: 0.9 mol% and degree of acetalization 63 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film G (film thickness 0.38 mm).

100 weight parts of polyvinyl acetal resin (carbon number of acetal group: 3, degree of polymerization: 1,700, amount of remaining acetyl group: 0.9 mol% and degree of acetalization 66: mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film H (film thickness 0.19 mm).

### [Preparation of the interlayer film for laminated glass]

Resin film G (film thickness 0.38 mm) and resin film H (film thickness 0.19 mm) described above were used to make a stack of resin film H (film thickness 0.19 mm)/resin film G (film thickness 0.38 mm)/resin film H (film thickness 0.19 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 39 micrometers. For the blocking properties, the measured adhesive strength was 81 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 13)

### [Preparation of each resin film]

100 weight parts of polyvinyl acetal resin (carbon number of acetal group: 10, degree of polymerization: 1,700, amount of remaining acetyl group: 0.9 mol% and degree of acetalization: 60 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film G (film thickness 0.12 mm).

100 weight parts of polyvinyl butyral resin (PVB resin: degree of polymerization: 1,700, amount of remaining acetyl group: 0.9 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.05 mm. The obtained resin film was designated as resin film H (film thickness 0.05 mm).

### [Preparation of the interlayer film for laminated glass]

Resin film G (film thickness 0.12 mm) and resin film H (film thickness 0.05 mm) described above were used to make a stack of resin film resin film H (film thickness 0.05 mm)/resin film G (film thickness 0.12 mm)/resin film H (film thickness 0.05 mm)/resin film G (film thickness 0.12 mm)/resin film H (film thickness 0.05 mm), in this order, for a total of 5 layers (total film thickness 0.39 mm) and the rest of the process was conducted in the same manner as in Example 1 to obtain the interlayer film for laminated glass. The roughness of the embossment of the obtained interlayer film, measured in the same manner as in Example 1, was 21 micrometers. For the blocking properties, the measured adhesive strength was 98 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 14)

### [Preparation of each resin film]

100 weight parts of polyvinyl acetal resin (carbon number of acetal group: 6, degree of polymerization: 1,700, amount of remaining acetyl group: 0.9 mol% and degree of acetalization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film G (film thickness 0.12 mm).

100 weight parts of polyvinyl butyral resin (PVB resin: degree of polymerization: 1,700, amount of remaining acetyl group: 0.9 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.32 mm. The obtained resin film was designated as resin film H (film thickness 0.32 mm).

### [Preparation of the interlayer film for laminated glass]

Resin film G (film thickness 0.12 mm) and resin film H (film thickness 0.32 mm) described above were used to make a stack of resin film resin film H (film thickness 0.32 mm)/resin film G (film thickness 0.12 mm)/resin film H (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 35 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 15)

### [Preparation of each resin film]

100 weight parts of polyvinyl acetal resin (carbon number of acetal group: 8, degree of polymerization: 1,700, amount of remaining acetyl group: 0.9 mol% and degree of acetalization: 63 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.10 mm. The obtained resin film was designated as resin film G (film thickness 0.10 mm).

100 weight parts of polyvinyl acetal resin (carbon number of acetal group: 3, degree of polymerization: 1,700, amount of remaining acetyl group: 0.9 mol% and degree of acetalization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.71 mm. The obtained resin film was designated as resin film H (film thickness 0.71 mm).

### [Preparation of the interlayer film for laminated glass]

Resin film G (film thickness 0.10 mm) and resin film H (film thickness 0.71 mm) described above were used to make a stack of resin film resin film H (film thickness 0.71 mm)/resin film G (film thickness 0.10 mm)/resin film H (film thickness 0.71 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 49 micrometers. For the blocking properties, the measured adhesive strength was 65 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 16)

### [Preparation of each resin film]

100 weight parts of polyvinyl acetal resin (carbon number of acetal group: 10, degree of polymerization: 1,700, amount of remaining acetyl group: 0.9 mol% and degree of acetalization: 60 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.34 mm. The obtained resin film was designated as resin film G (film thickness 0.34 mm).

100 weight parts of polyvinyl butyral resin (PVB resin: degree of polymerization: 1,700, amount of remaining acetyl group: 0.9 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.21 mm. The obtained resin film was designated as resin film H (film thickness 0.21 mm).

### [Preparation of the interlayer film for laminated glass]

Resin film G (film thickness 0.34 mm) and resin film H (film thickness 0.21 mm) described above were used to make a stack of resin film resin film H (film thickness 0.21 mm)/resin film G (film thickness 0.34 mm)/resin film H (film thickness 0.21 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 97 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 11-16 are summarized in Table 3.

**Table 3**

| | | | Examples | | | | | |
|---|---|---|---|---|---|---|---|---|
| | | | 11 | 12 | 13 | 14 | 15 | 16 |
| Resin film | G | Number of carbons in the acetal group | 6 | 8 | 10 | 6 | 8 | 10 |
| | | Film thickness (mm) | 0.12 | 0.38 | 0.12 | 0.12 | 0.10 | 0.34 |
| | H | Number of carbons in the acetal group | 4 | 3 | 4 | 4 | 3 | 4 |
| | | Film thickness (mm) | 0.13 | 0.19 | 0.05 | 0.32 | 0.71 | 0.21 |
| Interlayer film | Lamination configuration | | HGH | HGH | HGHGH | HGH | HGH | HGH |
| | Number of layers | | 3 | 3 | 5 | 3 | 3 | 3 |
| | Total film thickness (mm) | | 0.38 | 0.76 | 0.39 | 0.76 | 1.52 | 0.76 |
| | Roughness of the embossment (µm) | | 31 | 39 | 21 | 35 | 49 | 22 |
| | Blocking properties (g/cm) | | 83 | 81 | 98 | 80 | 65 | 97 |
| | Laminated glass | Deaeration | Good | Good | Good | Good | Good | Good |
| | | Optical distortion | Good | Good | Good | Good | Good | Good |
| Total assessment | | | ○ | ○ | ○ | ○ | ○ | ○ |

### (Example 17)

### [Preparation of each resin film]

100 weight parts of polyvinyl acetal resin (carbon number of acetal group: 4, degree of polymerization: 1,700, amount of remaining acetyl group: 12 mol% and degree of acetalization: 58 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film I (film thickness 0.12 mm).

100 weight parts of polyvinyl acetal resin (carbon number of acetal group: 4, amount of remaining acetyl group: 1 mol% and degree of acetalization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film J (film thickness 0.13 mm).

### [Preparation of the inter layer film for laminated glass]

Resin film I (film thickness 0.12 mm) and resin film J (film thickness 0.13 mm) described above were used to make a stack of resin film J (film thickness 0.13 mm)/resin film I (film thickness 0.12 mm)/resin film J (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 86 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

### (Example 18)

### [Preparation of each resin film]

100 weight parts of polyvinyl acetal resin (carbon number of acetal goup: 6, degree of polymerization: 1,700, amount of remaining acetyl group: 8 mol% and degree of acetalization: 55 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film I (film thickness 0.38 mm).

100 weight parts of polyvinyl acetal resin (carbon number of acetal group: 4, degree of polymerization: 1,700, remaining acetyl group 4 mol% and degree of acetalization: 64 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film J (film thickness 0.19 mm).

### [Preparation of the interlayer film for laminated glass]

Resin film I (film thickness 0.38 mm) and resin film J (film thickness 0.19 mm) described above were used to make a stack of resin film J (film thickness 0.19 mm)/resin film I (film thickness 0.38 mm)/resin film J (film thickness 0.19 mm), in this order, for a total of 3 layers (total film thickness 0.76 mm) and the rest of the process was conducted in the same manner as in Example 1 to obtain the inter layer film for laminated glass. The roughness of the embossment of the obtained inter layer film, measured in the same manner as in Example 1, was 38 micrometers. For the blocking properties, the measured adhesive strength was 81 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

### (Example 19)

### [Preparation of each resin film]

100 weight parts of polyvinyl acetal resin (carbon number of acetal group: 4, degree of polymerization: 1,700, amount of remaining acetyl group: 28 mol% and degree of acetalization: 50 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film I (film thickness 0.12 mm).

100 weight parts of polyvinyl acetal resin (carbon number of acetal group: 3, degree of polymerization: 1,700, remaining acetyl group 1 mol% and degree of acetalization: 67 mol%) and 40 weight parts of triethylene glycol di-2-ethyl butyrate, for the plasticiser, were mixed and thoroughly melted and kneaded using a mixing roll, followed by press molding using a press molding machine, to obtain a resin film with an average film thickness of 0.05 mm. The obtained resin film was designated as resin film J (film thickness 0.05 mm).

### [Preparation of the interlayer film for laminated glass]

Resin film I (film thickness 0.12 mm) and resin film J (film thickness 0.05 mm) described above were used to make a stack of resin film J (film thickness 0.05 mm)/resin film I (film thickness 0.12 mm)/resin film J (film thickness 0.05 mm)/resin film I (film thickness 0.12 mm)/resin film J (film thickness 0.05 mm), in this order, for a total of 5 layers (total film thickness 0.39 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 96 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

### (Example 20)

### [Preparation of each resin film]

Resin film I (film thickness 0.12 mm) in Example 17 was used without modification. The average film thickness of resin film J (film thickness 0.13 mm) was changed to 0.32 mm to prepare resin film J (film thickness 0.32 mm).

### [Preparation of the interlayer film for laminated glass]

Resin film I (film thickness 0.12 mm) and resin film J (film thickness 0.32 mm) described above were used to make a stack of resin film J (film thickness 0.32 mm)/resin film I (film thickness 0.12 mm)/resin film J (film thickness 0.32 mm), in this order, for a total of 3 layers (total film thickness 0.76 mm) and the rest of the process was conducted in the same manner as in Example 1 to obtain the inter layer film for laminated glass. The roughness of the embossment of the obtained interlayer film, measured in the same manner as in Example 1, was 33 micrometers. For the blocking properties, the measured adhesive strength was 83 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

### (Example 21)

### [Preparation of each resin film]

The average film thickness of resin film I (film thickness 0.38 mm) in Example 18 was changed to 0.10 mm to prepare resin film I (film thickness 0.10 mm). The average film thickness of resin film J (film thickness 0.19 mm) was changed to 0.71 mm to prepare resin film J (film thickness 0.71 mm).

### [Preparation of the interlayer film for laminated glass]

Resin film I (film thickness 0.10 mm) and resin film J (film thickness 0.71 mm) described above were used to make a stack of resin film resin film J (film thickness 0.71 mm)/resin film I (film thickness 0.10 mm)/resin film J (film thickness 0.71 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 48 micrometers. For the blocking properties, the measured adhesive strength was 66 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

### (Example 22)

### [Preparation of each resin film]

The average film thickness of resin film I (film thickness 0.12 mm) in Example 19 was changed to 0.36 mm to prepare resin film I (film thickness 0.10 mm). The average film thickness of resin film J (film thickness 0.05 mm) was changed to 0.20 mm to prepare resin film J (film thickness 0.20 mm).

### [Preparation of the interlayer film for laminated glass]

Resin film I (film thickness 0.36 mm) and resin film J (film thickness 0.20 mm) described above were used to make a stack of resin film J (film thickness 0.20 mm)/resin film I (film thickness 0.36 mm)/resin film J (film thickness 0.20 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 21 micrometers. For the blocking properties, the measured adhesive strength was 99 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration, optical distortion and noise insulation. The result was good: i.e. the deaeration was superior, no optical distortion occurred and noise insulation was excellent.

The results of Examples 17-22 are summarized in Table 4.

**Table 4**

| | | | Examples | | | | | |
|---|---|---|---|---|---|---|---|---|
| | | | 17 | 18 | 19 | 20 | 21 | 22 |
| Resin film | I | Number of carbons in the acetal group | 4 | 6 | 4 | 4 | 6 | 4 |
| | | Acetyl group content (mol%) | 12 | 8 | 28 | 12 | 8 | 28 |
| | | Film thickness (mm) | 0.12 | 0.38 | 0.12 | 0.12 | 0.10 | 0.36 |
| | J | Number of carbons in the acetal group | 4 | 4 | 3 | 4 | 4 | 3 |
| | | Acetyl group content (mol%) | 1 | 4 | 1 | 1 | 4 | 1 |
| | | Film thickness (mm) | 0.13 | 0.19 | 0.05 | 0.32 | 0.71 | 0.20 |
| Interlayer film | Lamination configuration | | JIJ | JIJ | JIJIJ | JIJ | JIJ | JIJ |
| | Number of layers | | 3 | 3 | 5 | 3 | 3 | 3 |
| | Total film thickness (mm) | | 0.38 | 0.76 | 0.39 | 0.76 | 1.52 | 0.76 |
| | Roughness of the embossment (µm) | | 30 | 38 | 22 | 33 | 48 | 21 |
| | Blocking properties (g/cm) | | 86 | 81 | 96 | 83 | 66 | 99 |
| Laminated glass | Deaeration | | Good | Good | Good | Good | Good | Good |
| | Optical distortion | | Good | Good | Good | Good | Good | Good |
| Total assessment | | | ○ | ○ | ○ | ○ | ○ | ○ |

### (Example 23)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film K (film thickness 0.13 mm).

100 weight parts of polyvinyl butyral resin (PVB resin: degree of polymerization 2,200, remaining acetyl group 1 mol% and degree of butyralization 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film L (film thickness 0.12 mm).

### [Preparation of the interlayer film for laminated glass]

Resin film K (film thickness 0.13 mm) and resin film L (film thickness 0.12 mm) described above were used to make a stack of resin film K (film thickness 0.13 mm)/resin film L (film thickness 0.12 mm)/resin film K (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 85 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 24)

### [Preparation of each resin film]

100 weight parts of polyvinyl butyral resin (PVB resin: degree of polymerization: 5,000, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film K (film thickness 0.19 mm).

100 weight parts of polyvinyl butyral resin (PVB resin: degree of polymerization: 1,000, amount of remaining acetyl group: 1 mol% and degree of butyralization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film L (film thickness 0.38 mm).

### [Preparation of the interlayer film for laminated glass]

Resin film K (film thickness 0.19 mm) and resin film L (film thickness 0.38 mm) described above were used to make a stack of resin film K (film thickness 0.19 mm)/resin film L (film thickness 0.38 mm)/resin film K (film thickness 0.19 mm), in this order, for a total of 3 layers (total film thickness 0.76 mm) and the rest of the process was conducted in the same manner as in Example 1 to obtain the inter layer film for laminated glass. The roughness of the embossment of the obtained interlayer film, measured in the same manner as in Example 1, was 40 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 25)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.05 mm. The obtained resin film was designated as resin film K (film thickness 0.05 mm).

100 weight parts of polyvinyl butyral resin (PVB resin: degree of polymerization 500, remaining acetyl group 1 mol% and degree of butyralization 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.14 mm. The obtained resin film was designated as resin film L (film thickness 0.14 mm).

100 weight parts of polyvinyl butyral resin (PVB resin: degree of polymerization: 4,000, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.14 mm. The obtained resin film was designated as resin film M (film thickness 0.14 mm).

### [Preparation of the interlayer film for laminated glass]

Resin film K (film thickness 0.05 mm), resin film L (film thickness 0.14 mm) and resin film M (film thickness 0.14 mm) described above were used to make a stack of resin film K (film thickness 0.05 mm)/resin film L (film thickness 0.14 mm)/resin film M (film thickness 0.14 mm)/resin film K (film thickness 0.05 mm), in this order, for a total of 4 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 21 micrometers. For the blocking properties, the measured adhesive strength was 95 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 26)

### [Preparation of each resin film]

100 weight parts of polyvinyl butyral resin (PVB resin: degree of polymerization: 1,500, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film K (film thickness 0.19 mm).

100 weight parts of polyvinyl butyral resin (PVB resin: degree of polymerization: 2,500, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film L (film thickness 0.19 mm).

### [Preparation of the interlayer film for laminated glass]

Resin film K (film thickness 0.19 mm) and resin film L (film thickness 0.19 mm) described above were used to make a stack of resin film K (film thickness 0.19 mm)/resin film L (film thickness 0.19 mm), in this order, for a total of 2 layers (total film thickness 0.38 mm) and the rest of the process was conducted in the same manner as in Example 1 to obtain the interlayer film for laminated glass. The roughness of the embossment of the obtained inter layer film, measured in the same manner as in Example 1, was 37 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 23-26 are summarized in Table 5.

**Table 5**

| | | | Examples | | | |
|---|---|---|---|---|---|---|
| | | | 23 | 24 | 25 | 26 |
| Resin film | K | Average degree of polymerization | 1700 | 5000 | 1700 | 1500 |
| | | Film thickness (mm) | 0.13 | 0.19 | 0.05 | 0.19 |
| | L | Average degree of polymerization | 2200 | 1000 | 500 | 2500 |
| | | Film thickness (mm) | 0.12 | 0.38 | 0.14 | 0.19 |
| | M | Average degree of polymerization | | | 4000 | |
| | | Film thickness (mm) | | | 0.14 | |
| Interlayer film | Lamination configuration | | KLK | KLK | KLMK | KL |
| | Number of layers | | 3 | 3 | 4 | 2 |
| | Total film thickness (mm) | | 0.38 | 0.76 | 0.38 | 0.38 |
| | Roughness of the embossment (µm) | | 30 | 40 | 21 | 37 |
| | Blocking properties (g/cm) | | 85 | 80 | 95 | 80 |
| Laminated glass | Deaeration | | Good | Good | Good | Good |
| | Optical distortion | | Good | Good | Good | Good |
| Total assessment | | | ○ | ○ | ○ | ○ |

### (Example 27)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.32 mm. The obtained resin film was designated as resin film K (film thickness 0.32 mm).

100 weight parts of polyvinyl butyral resin (PVB resin: degree of polymerization: 2,200, amount of remaining acetyl group: 1 mol% and degree of butyralization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film L (film thickness 0.12 mm).

### [Preparation of the inter layer film for laminated glass]

Resin film K (film thickness 0.32 mm) and resin film L (film thickness 0.12 mm) described above were used to make a stack of resin film K (film thickness 0.32 mm)/resin film L (film thickness 0.12 mm)/resin film K (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 32 micrometers. For the blocking properties, the measured adhesive strength was 85 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 28)

### [Preparation of each resin film]

100 weight parts of polyvinyl butyral resin (PVB resin: degree of polymerization: 5,000, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.70 mm. The obtained resin film was designated as resin film K (film thickness 0.70 mm).

100 weight parts of polyvinyl butyral resin (PVB resin: degree of polymerization: 1,000, amount of remaining acetyl group: 1 mol% and degree of butyralization: 66 mol%) and 40 weight parts of triethylene glycol di-2-ethyl butyrate, for the plasticiser, were mixed and thoroughly melted and kneaded using a mixing roll, followed by press molding using a press molding machine, to obtain a resin film with an average film thickness of 0.12 mm. The obtained resin film was designated as resin film L (film thickness 0.12 mm).

### [Preparation of the interlayer film for laminated glass]

Resin film K (film thickness 0.70 mm) and resin film L (film thickness 0.12 mm) described above were used to make a stack of resin film K (film thickness 0.70 mm)/resin film L (film thickness 0.12 mm)/resin film K (film thickness 0.70 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 50 micrometers. For the blocking properties, the measured adhesive strength was 60 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 29)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.20 mm. The obtained resin film was designated as resin film K (film thickness 0.20 mm).

100 weight parts of polyvinyl butyral resin (PVB resin: degree of polymerization 500, remaining acetyl group 1 mol% and degree of butyralization 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.18 mm. The obtained resin film was designated as resin film L (film thickness 0.18 mm).

100 weight parts of polyvinyl butyral resin (PVB resin: degree of polymerization: 4,000, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.18 mm. The obtained resin film was designated as resin film M (film thickness 0.18 mm).

### [Preparation of the interlayer film for laminated glass]

Resin film K (film thickness 0.20 mm), resin film L (film thickness 0.18 mm) and resin film M (film thickness 0.18 mm) described above were used to make a stack of resin film K (film thickness 0.20 mm)/resin film L (film thickness 0.18 mm)/resin film M (film thickness 0.18 mm)/resin film K (film thickness 0.20 mm), in this order, for a total of 4 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 93 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 30)

### [Preparation of each resin film]

100 weight parts of polyvinyl butyral resin (PVB resin: degree of polymerization: 1,500, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film K (film thickness 0.38 mm).

100 weight parts of polyvinyl butyral resin (PVB resin: degree of polymerization 2,500, remaining acetyl group 1 mol% and degree of butyralization 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film L (film thickness 0.38 mm).

### [Preparation of the inter layer film for laminated glass]

Resin film K (film thickness 0.38 mm) and resin film L (film thickness 0.38 mm) described above were used to make a stack of resin film K (film thickness 0.38 mm)/resin film L (film thickness 0.38 mm), in this order, for a total of 2 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 41 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 27-30 are summarized in Table 6.

**Table 6**

| | | | Examples | | | |
|---|---|---|---|---|---|---|
| | | | 27 | 28 | 29 | 30 |
| Resin film | K | Average degree of polymerization | 1700 | 5000 | 1700 | 1500 |
| | | Film thickness (mm) | 0.32 | 0.70 | 0.20 | 0.38 |
| | L | Average degree of polymerization | 2200 | 1000 | 500 | 2500 |
| | | Film thickness (mm) | 0.12 | 0.12 | 0.18 | 0.38 |
| | M | Average degree of polymerization | | | 4000 | |
| | | Film thickness (mm) | | | 0.18 | |
| Interlayer film | Lamination configuration | | KLK | KLK | KLMK | KL |
| | Number of layers | | 3 | 3 | 4 | 2 |
| | Total film thickness (mm) | | 0.76 | 1.52 | 0.76 | 0.76 |
| | Roughness of the embossment (µm) | | 32 | 50 | 22 | 41 |
| | Blocking properties (g/cm) | | 85 | 60 | 93 | 80 |
| Laminated glass | Deaeration | | Good | Good | Good | Good |
| | Optical distortion | | Good | Good | Good | Good |
| Total assessment | | | ○ | ○ | ○ | ○ |

### (Example 31)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film N (film thickness 0.13 mm).

100 weight parts of polyvinyl butyral resin (PVB resin: degree of polymerization 1,700, remaining acetyl group 1 mol% and degree of butyralization 65 mol%) and 55 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film O (film thickness 0.12 mm).

### [Preparation of the interlayer film for laminated glass]

Resin film N (film thickness 0.13 mm) and resin film O (film thickness 0.12 mm) described above were used to make a stack of resin film N (film thickness 0.13 mm)/resin film O (film thickness 0.12 mm)/resin film N (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 84 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 32)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film N (film thickness 0.19 mm).

100 weight parts of polyvinyl butyral resin (PVB resin: degree of polymerization: 1,700, amount of remaining acetyl group: 1 mol% and degree of butyralization: 66 mol%) and 45 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film O (film thickness 0.38 mm).

### [Preparation of the interlayer film for laminated glass]

Resin film N (film thickness 0.19 mm) and resin film O (film thickness 0.38 mm) described above were used to make a stack of resin film N (film thickness 0.19 mm)/resin film O (film thickness 0.38 mm)/resin film N (film thickness 0.19 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 39 micrometers. For the blocking properties, the measured adhesive strength was 79 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 33)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.05 mm. The obtained resin film was designated as resin film N (film thickness 0.05 mm).

100 weight parts of polyvinyl butyral resin (PVB resin: degree of polymerization: 1,700, amount of remaining acetyl group: 1 mol% and degree of butyralization: 60 mol%) and 70 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.14 mm. The obtained resin film was designated as resin film O (film thickness 0.14 mm).

100 weight parts of polyvinyl butyral resin (PVB resin: degree of polymerization: 1,700, amount of remaining acetyl group: 1 mol% and degree of butyralization: 66 mol%) and 25 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.14 mm. The obtained resin film was designated as resin film P (film thickness 0.14 mm).

### [Preparation of the interlayer film for laminated glass]

Resin film N (film thickness 0.05 mm), resin film O (film thickness 0.14 mm) and resin film P (film thickness 0.14 mm) described above were used to make a stack of resin film N (film thickness 0.05 mm)/resin film O (film thickness 0.14 mm)/resin film P (film thickness 0.14 mm)/resin film N (film thickness 0.05 mm), in this order, for a total of 4 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 96 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 34)

### [Preparation of each resin film]

100 weight parts of polyvinyl butyral resin (PVB resin: degree of polymerization: 1,700, amount of remaining acetyl group: 1 mol% and degree of butyralization: 66 mol%) and 30 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film N (film thickness 0.19 mm).

100 weight parts of polyvinyl butyral resin (PVB resin: degree of polymerization: 1,700, amount of remaining acetyl group: 1 mol% and degree of butyralization: 66 mol%) and 50 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film O (film thickness 0.19 mm).

### [Preparation of the interlayer film for laminated glass]

Resin film N (film thickness 0.19 mm) and resin film O (film thickness 0.19 mm) described above were used to make a stack of resin film N (film thickness 0.19 mm)/resin film O (film thickness 0.19 mm), in this order, for a total of 2 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 34 micrometers. For the blocking properties, the measured adhesive strength was 85 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 31-34 are summarized in Table 7.

**Table 7**

| | | | Examples | | | |
|---|---|---|---|---|---|---|
| | | | 31 | 32 | 33 | 34 |
| Resin film | N | Plasticizer content | 40 | 40 | 40 | 30 |
| | | Film thickness (mm) | 0.13 | 0.19 | 0.05 | 0.19 |
| | O | Plasticizer content | 55 | 45 | 70 | 50 |
| | | Film thickness (mm) | 0.12 | 0.38 | 0.14 | 0.19 |
| | P | Plasticizeer content | | | 25 | |
| | | Film thickness (mm) | | | 0.14 | |
| Interlayer film | Lamination configuration | | NON | NON | NOPN | NO |
| | Number of layers | | 3 | 3 | 4 | 2 |
| | Total film thickness (mm) | | 0.38 | 0.76 | 0.38 | 0.38 |
| | Roughness of the embossment (µm) | | 30 | 39 | 22 | 34 |
| | Blocking properties (g/cm) | | 84 | 79 | 96 | 85 |
| Laminated glass | Deaeration | | Good | Good | Good | Good |
| | Optical distortion | | Good | Good | Good | Good |
| Total assessment | | | ○ | ○ | ○ | ○ |

### (Example 35)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.32 mm. The obtained resin film was designated as resin film N (film thickness 0.32 mm).

100 weight parts of polyvinyl butyral resin (PVB resin: degree of polymerization: 1,700, amount of remaining acetyl group: 1 mol% and degree of butyralization: 66 mol%) and 45 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film O (film thickness 0.12 mm).

### [Preparation of the interlayer film for laminated glass]

Resin film N (film thickness 0.32 mm) and resin film O (film thickness 0.12 mm) described above were used to make a stack of resin film N (film thickness 0.32 mm)/resin film O (film thickness 0.12 mm)/resin film N (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 83 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 36)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.71 mm. The obtained resin film was designated as resin film N (film thickness 0.71 mm).

100 weight parts of polyvinyl butyral resin (PVB resin: degree of polymerization: 1,000, amount of remaining acetyl group: 1 mol% and degree of butyralization: 66 mol%) and 55 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.10 mm. The obtained resin film was designated as resin film O (film thickness 0.10 mm).

### [Preparation of the interlayer film for laminated glass]

Resin film N (film thickness 0.71 mm) and resin film O (film thickness 0.10 mm) described above were used to make a stack of resin film N (film thickness 0.71 mm)/resin film O (film thickness 0.10 mm)/resin film N (film thickness 0.71 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 49 micrometers. For the blocking properties, the measured adhesive strength was 60 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 37)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.21 mm. The obtained resin film was designated as resin film N (film thickness 0.21 mm).

100 weight parts of polyvinyl butyral resin (PVB resin: degree of polymerization 1,700, remaining acetyl group 1 mol% and degree of butyralization 60 mol%) and 70 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.17 mm. The obtained resin film was designated as resin film O (film thickness 0.17 mm).

100 weight parts of polyvinyl butyral resin (PVB resin: degree of polymerization: 1,700, amount of remaining acetyl group: 1 mol% and degree of butyralization: 66 mol%) and 25 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.17 mm. The obtained resin film was designated as resin film P (film thickness 0.17 mm).

### [Preparation of the interlayer film for laminated glass]

Resin film N (film thickness 0.21 mm), resin film O (film thickness 0.17 mm) and resin film P (film thickness 0.17 mm) described above were used to make a stack of resin film N (film thickness 0.21 mm)/resin film O (film thickness 0.17 mm)/resin film P (film thickness 0.17 mm)/resin film N (film thickness 0.21 mm), in this order, for a total of 4 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 95 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 38)

### [Preparation of each resin film]

100 weight parts of polyvinyl butyral resin (PVB resin: degree of polymerization: 1,700, amount of remaining acetyl group: 1 mol% and degree of butyralization: 66 mol%) and 35 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film N (film thickness 0.38 mm).

100 weight parts of polyvinyl butyral resin (PVB resin: degree of polymerization: 1,700, amount of remaining acetyl group: 1 mol% and degree of butyralization: 66 mol%) and 45 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.38 mm. The obtained resin film was designated as resin film O (film thickness 0.38 mm).

### [Preparation of the inter layer film for laminated glass]

Resin film N (film thickness 0.38 mm) and resin film O (film thickness 0.38 mm) described above were used to make a stack of resin film N (film thickness 0.38 mm)/resin film O (film thickness 0.38 mm), in this order, for a total of 2 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 40 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 35-38 are summarized in Table 8.

**Table 8**

| | | | Examples | | | |
|---|---|---|---|---|---|---|
| | | | 35 | 36 | 37 | 38 |
| Resin film | N | Plasticizer content | 40 | 40 | 40 | 35 |
| | | Film thickness (mm) | 0.32 | 0.71 | 0.21 | 0.38 |
| | O | Plasticizer content | 45 | 55 | 70 | 45 |
| | | Film thickness (mm) | 0.12 | 0.10 | 0.17 | 0.38 |
| | P | Plasticizeer content | | | 25 | |
| | | Film thickness (mm) | | | 0.17 | |
| Interlayer film | Lamination configuration | | NON | NON | NOPN | NO |
| | Number of layers | | 3 | 3 | 4 | 2 |
| | Total film thickness (mm) | | 0.76 | 1.52 | 0.76 | 0.76 |
| | Roughness of the embossment (µm) | | 30 | 49 | 22 | 40 |
| | Blocking properties (g/cm) | | 83 | 60 | 95 | 80 |
| Laminated glass | Deaeration | | Good | Good | Good | Good |
| | Optical distortion | | Good | Good | Good | Good |
| Total assessment | | | ○ | ○ | ○ | ○ |

### (Example 39)

### [Preparation of each resin film]

100 weight parts of polyvinyl butyral resin (PVB resin: degree of polymerization: 1,700, amount of remaining acetyl group: 1 mol% and degree of butyralization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film Q (film thickness 0.13 mm).

100 weight parts of vinyl chloride-type resin (PVC resin: copolymer of vinyl chloride-ethylene -glycidyl methacrylate) and 40 weight parts of di -2-ethylhexyl phthalate, for the plasticizer, were mixed and thoroughly melted and kneaded using a mixing roll, followed by press molding using a press molding machine, to obtain a resin film with an average film thickness of 0.12 mm. The obtained resin film was designated as resin film R (film thickness 0.12 mm).

### [Preparation of the interlayer film for laminated glass]

Resin film Q (film thickness 0.13 mm) and resin film R (film thickness 0.12 mm) described above were used to make a stack of resin film Q (film thickness 0.13 mm)/resin film R (film thickness 0.12 mm)/resin film Q (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 30 micrometers. For the blocking properties, the measured adhesive strength was 85 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 40)

### [Preparation of each resin film]

100 weight parts of polyvinyl butyral resin (PVB resin: degree of polymerization: 4,500, amount of remaining acetyl group: 28 mol% and degree of butyralization: 48 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.19 mm. The obtained resin film was designated as resin film Q (film thickness 0.19 mm).

The average film thickness of resin film R (film thickness 0.12 mm) in Example 47 was changed to 0.38 mm to prepare resin film R (film thickness 0.38 mm).

### [Preparation of the interlayer film for laminated glass]

Resin film Q (film thickness 0.19 mm) and resin film R (film thickness 0.38 mm) described above were used to make a stack of resin film Q (film thickness 0.19 mm)/resin film R (film thickness 0.38 mm)/resin film Q (film thickness 0.19 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 39 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 41)

### [Preparation of each resin film]

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.05 mm. The obtained resin film was designated as resin film Q (film thickness 0.05 mm).

100 weight parts of polyurethane resin (PU resin: copolymer of 4,4-diisocyanatedicyclohexylmethane and polytetramethylene glycol) was thoroughly melted and kneaded using a mixing roll, followed by press molding using a press molding machine, to obtain a resin film with an average film thickness of 0.12 mm. The obtained resin film was designated as resin film S (film thickness 0.12 mm).

### [Preparation of the interlayer film for laminated glass]

Resin film Q (film thickness 0.05 mm) and resin film S (film thickness 0.12 mm) described above were used to make a stack of resin film Q (film thickness 0.05 mm)/resin film S (film thickness 0.12 mm)/resin film Q (film thickness 0.05 mm)/resin film S (film thickness 0.12 mm) /resin film Q (film thickness 0.05 mm), in this order, for a total of 5 layers (total film thickness 0.39 mm) and the rest of the process was conducted in the same manner as in Example 1 to obtain the interlayer film for laminated glass. The roughness of the embossment of the obtained interlayer film, measured in the same manner as in Example 1, was 21 micrometers. For the blocking properties, the measured adhesive strength was 96 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 42)

### [Preparation of each resin film]

100 weight parts of polyvinyl butyral resin (PVB resin: degree of polymerization: 2,500, amount of remaining acetyl group: 1 mol% and degree of butyralization: 60 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.10 mm. The obtained resin film was designated as resin film Q (film thickness 0.10 mm).

The average film thickness of resin film R (film thickness 0.12 mm) in Example 39 was changed to 0.09 mm to prepare resin film R (film thickness 0.09 mm). The average film thickness of resin film S (film thickness 0.12 mm) in Example 41 was changed to 0.09 mm to prepare resin film S (film thickness 0.09 mm).

### [Preparation of the interlayer film for laminated glass]

Resin film Q (film thickness 0.10 mm), resin film R (film thickness 0.09 mm) and resin film S (film thickness 0.09 mm) described above were used to make a stack of resin film Q (film thickness 0.10 mm)/resin film R (film thickness 0.09 mm)/resin film S (film thickness 0.09 mm)/resin film Q (film thickness 0.10 mm), in this order, for a total of 4 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 26 micrometers. For the blocking properties, the measured adhesive strength was 89 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 39-42 are summarized in Table 9.

**Table 9**

| | | | Examples | | | |
|---|---|---|---|---|---|---|
| | | | 39 | 40 | 41 | 42 |
| Resin film | Q | Type | PVB | PVB | PVB | PVB |
| | | Film thickness (mm) | 0.13 | 0.19 | 0.05 | 0.10 |
| | R | Type | PVC | PVC | | PVC |
| | | Film thickness (mm) | 0.12 | 0.38 | | 0.09 |
| | S | Type | | | PU | PU |
| | | Film thickness (mm) | | | 0.12 | 0.09 |
| Interlayer film | Lamination configuration | | QRQ | QRQ | QSQSQ | QRSQ |
| | Number of layers | | 3 | 3 | 5 | 4 |
| | Total film thickness (mm) | | 0.38 | 0.76 | 0.39 | 0.38 |
| | Roughness of the embossment (µm) | | 30 | 39 | 21 | 26 |
| | Blocking properties (g/cm) | | 85 | 80 | 96 | 89 |
| Laminated glass | Deaeration | | Good | Good | Good | Good |
| | Optical distortion | | Good | Good | Good | Good |
| Total assessment | | | ○ | ○ | ○ | ○ |

### (Example 43)

### [Preparation of each resin film]

100 weight parts of polyvinyl butyral resin (PVB resin: degree of polymerization: 1,700, amount of remaining acetyl group: 1 mol% and degree of butyralization: 65 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.32 mm. The obtained resin film was designated as resin film Q (film thickness 0.32 mm).

Resin film R prepared in Example 1 was also used as resin film R (film thickness 0.12 mm).

### [Preparation of the interlayer film for laminated glass]

Resin film Q (film thickness 0.32 mm) and resin film R (film thickness 0.12 mm) described above were used to make a stack of resin film Q (film thickness 0.32 mm)/resin film R (film thickness 0.12 mm)/resin film Q (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 32 micrometers. For the blocking properties, the measured adhesive strength was 84 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 44)

### [Preparation of each resin film]

100 weight parts of polyvinyl butyral resin (PVB resin: degree of polymerization: 4,500, amount of remaining acetyl group: 1 mol% and degree of butyralization: 48 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.71 mm. The obtained resin film was designated as resin film Q (film thickness 0.71 mm).

The average film thickness of resin film B (film thickness 0.12 mm) in Example 1 was changed to 0.10 mm to prepare resin film R (film thickness 0.10 mm).

### [Preparation of the interlayer film for laminated glass]

Resin film Q (film thickness 0.71 mm) and resin film R (film thickness 0.10 mm) described above were used to make a stack of resin film Q (film thickness 0.71 mm)/resin film R (film thickness 0.10 mm)/resin film Q (film thickness 0.71 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 49 micrometers. For the blocking properties, the measured adhesive strength was 64 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 45)

### [Preparation of each resin film]

100 weight parts of polyvinyl butyral resin (PVB resin: degree of polymerization: 700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.21 mm. The obtained resin film was designated as resin film Q (film thickness 0.21 mm).

100 weight parts of polyurethane resin (PU resin: copolymer of 4,4-diisocyanatedicyclohexylmethane and polytetramethylene glycol) was thoroughly melted and kneaded using a mixing roll, followed by press molding using a press molding machine, to obtain a resin film with an average film thickness of 0.07 mm. The obtained resin film was designated as resin film S (film thickness 0.07 mm).

### [Preparation of the interlayer film for laminated glass]

Resin film Q (film thickness 0.21 mm) and resin film S (film thickness 0.07 mm) described above were used to make a stack of resin film Q (film thickness 0.21 mm)/resin film S (film thickness 0.07 mm)/resin film Q (film thickness 0.21 mm)/resin film S (film thickness 0.07 mm)/resin film Q (film thickness 0.21 mm), in this order, for a total of 5 layers (total film thickness 0.77 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 95 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 46)

### [Preparation of each resin film]

100 weight parts of polyvinyl butyral resin (PVB resin: degree of polymerization: 2,500, amount of remaining acetyl group: 1 mol% and degree of butyralization: 60 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.30 mm. The obtained resin film was designated as resin film Q (film thickness 0.30 mm).

The average film thickness of resin film R (film thickness 0.12 mm) in Example 43 was changed to 0.08 mm to prepare resin film R (film thickness 0.08 mm). The average film thickness of resin film S (film thickness 0.12 mm) in Example 45 was changed to 0.08 mm to prepare resin film S (film thickness 0.08 mm).

### [Preparation of the interlayer film for laminated glass]

Resin film Q (film thickness 0.30 mm), resin film R (film thickness 0.08 mm) and resin film S (film thickness 0.08 mm) described above were used to make a stack of resin film Q (film thickness 0.30 mm)/resin film R (film thickness 0.08 mm)/resin film S (film thickness 0.08 mm)/resin film Q (film thickness 0.30 mm), in this order, for a total of 4 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 28 micrometers. For the blocking properties, the measured adhesive strength was 90 g/cm, which was low. This indicated that the anti -blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 43-46 are summarized in Table 10.

**Table 10**

| | | | Examples | | | |
|---|---|---|---|---|---|---|
| | | | 43 | 44 | 45 | 46 |
| Resin film | Q | Type | PVB | PVB | PVB | PVB |
| | | Film thickness (mm) | 0.32 | 0.71 | 0.21 | 0.30 |
| | R | Type | PVC | PVC | | PVC |
| | | Film thickness (mm) | 0.12 | 0.10 | | 0.08 |
| | S | Type | | | PU | PU |
| | | Film thickness (mm) | | | 0.07 | 0.08 |
| Interlayer film | Lamination configuration | | QRQ | QRQ | QSQSQ | QRSQ |
| | Number of layers | | 3 | 3 | 5 | 4 |
| | Total film thickness (mm) | | 0.76 | 1.52 | 0.77 | 0.76 |
| | Roughness of the embossment (µm) | | 32 | 49 | 22 | 28 |
| | Blocking properties (g/cm) | | 84 | 64 | 95 | 90 |
| Laminated glass | Deaeration | | Good | Good | Good | Good |
| | Optical distortion | | Good | Good | Good | Good |
| Total assessment | | | ○ | ○ | ○ | ○ |

### (Example 47)

### [Preparation of each resin film]

100 weight parts of modified polyvinyl butyral resin (modified PVB resin: degree of polymerization: 1,700 and amount of remaining acetyl group: 1 mol %), prepared by reacting polyvinyl alcohol and n-hexylaldehyde to obtain nuclear particles and then forming an outer-shell layer acetalized with n-butyraldehyde on the surface of the neclear particles by reacting with n-butyl aldehyde, and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.12 mm. The obtained resin film was designated as resin film T (film thickness 0.12 mm). The glass transition temperature of this resin film T was 7°C.

100 weight parts of polyvinyl butyral resin (PVB resin: degree of polymerization: 1,700, amount of remaining acetyl group: 1 mol% and degree of butyralization: 66 mol%) and 40 weight parts of triethylene glycol di-2-ethyl butyrate, for the plasticizer, were mixed and thoroughly melted and kneaded using a mixing roll, followed by press molding using a press molding machine, to obtain a resin film with an average film thickness of 0.13 mm. The obtained resin film was designated as resin film U (film thickness 0.13 mm).

### [Preparation of the interlayer film for laminated glass]

Resin film T (film thickness 0.12 mm) and resin film U (film thickness 0.13 mm) described above were used to make a stack of resin film U (film thickness 0.13 mm)/resin film T (film thickness 0.12 mm)/resin film U (film thickness 0.13 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 32 micrometers. For the blocking properties, the measured adhesive strength was 85 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 48)

### [Preparation of each resin film]

Butyl polyacrylate resin was thoroughly melted and kneaded using a mixing roll, followed by press molding using a press molding machine, to obtain a resin film with an average film thickness of 0.19 mm. The obtained resin film was designated as resin film T (film thickness 0.19 mm). The glass transition temperature of this resin film T was 13 °C.

The average film thickness of resin film U (film thickness 0.13 mm) in Example 47 was changed to 0.19 mm to prepare resin film U (film thickness 0.19 mm).

### [Preparation of the interlayer film for laminated glass]

Resin film T (film thickness 0.19 mm) and resin film U (film thickness 0.19 mm) described above were used to make a stack of resin film T (film thickness 0.19 mm)/resin film U (film thickness 0.19 mm), in this order, for a total of 2 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 37 micrometers. For the blocking properties, the measured adhesive strength was 80 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 49)

### [Preparation of each resin film]

Methyl polyacrylate resin was thoroughly melted and kneaded using a mixing roll, followed by press molding using a press molding machine, to obtain a resin film with an average film thickness of 0.26 mm. The obtained resin film was designated as resin film T (film thickness 0.26 mm). The glass transition temperature of this resin film T was 3 °C.

The average film thickness of resin film U (film thickness 0.13 mm) in Example 47 was changed to 0.06 mm to prepare resin film U (film thickness 0.06 mm).

### [Preparation of the interlayer film for laminated glass]

Resin film T (film thickness 0.26 mm) and resin film U (film thickness 0.06 mm) described above were used to make a stack of resin film U (film thickness 0.06 mm)/resin film T (film thickness 0.26 mm)/resin film U (film thickness 0.06 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 23 micrometers. For the blocking properties, the measured adhesive strength was 95 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred. (Example 50)

### [Preparation of each resin film]

Ethylene-vinyl acetate copolymer resin (EVA resin) was thoroughly melted and kneaded using a mixing roll, followed by press molding using a press molding machine, to obtain a resin film with an average film thickness of 0.10 mm. The obtained resin film was designated as resin film T (film thickness 0.10 mm). The glass transition temperature of this resin film T was -18°C.

100 weight parts of vinyl chloride-type resin (PVC resin: copolymer of vinyl chloride-ethylene -glycidyl methacrylate) and 40 weight parts of di -2-ethylhexyl phthalate, for the plasticizer, were mixed and thoroughly melted and kneaded using a mixing roll, followed by press molding using a press molding machine, to obtain a resin film with an average film thickness of 0.14 mm. The obtained resin film was designated as resin film U (film thickness 0.14 mm).

### [Preparation of the interlayer film for laminated glass]

Resin film T (film thickness 0.10 mm) and resin film U (film thickness 0.14 mm) described above were used to make a stack of resin film U (film thickness 0.14 mm)/resin film T (film thickness 0.10 mm)/resin film U (film thickness 0.14 mm), in this order, for a total of 3 layers (total film thickness 0.38 mm) and the rest of the process was conducted in the same manner as in Example 1 to obtain the interlayer film for laminated glass. The roughness of the embossment of the obtained interlayer film, measured in the same manner as in Example 1, was 29 micrometers. For the blocking properties, the measured adhesive strength was 89 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 47-50 are summarized in Table 11.

**Table 11**

| | | | Examples | | | |
|---|---|---|---|---|---|---|
| | | | 47 | 48 | 49 | 50 |
| Resin film | T | Type | Modified PVB | Butyl polyacrylate | Methyl polyacrylate | EVA |
| | | Tg (°C) | 7 | 13 | 3 | -18 |
| | | Film thickness (mm) | 0.12 | 0.19 | 0.26 | 0.10 |
| | U | Type | PVB | PVB | PVB | PVC |
| | | Film thickness (mm) | 0.13 | 0.19 | 0.06 | 0.14 |
| Interlayer film | Lamination configuration | | UTU | TU | UTU | UTU |
| | Number of layers | | 3 | 2 | 3 | 3 |
| | Total film thickness (mm) | | 0.38 | 0.38 | 0.38 | 0.38 |
| | Roughness of the embossment (µm) | | 32 | 37 | 23 | 29 |
| | Blocking properties (g/cm) | | 85 | 80 | 95 | 89 |
| Laminated glass | Deaeration | | Good | Good | Good | Good |
| | Optical distortion | | Good | Good | Good | Good |
| Total assessment | | | ○ | ○ | ○ | ○ |

### (Example 51)

### [Preparation of each resin film]

Resin film T (film thickness 0.12 mm) in Example 47 was used without modification. The average film thickness of resin film U (film thickness 0.13 mm) in Example 47 was changed to 0.32 mm to prepare resin film U (film thickness 0.32 mm).

### [Preparation of the interlayer film for laminated glass]

Resin film T (film thickness 0.12 mm) and resin film U (film thickness 0.32 mm) described above were used to make a stack of resin film U (film thickness 0.32 mm)/resin film T (film thickness 0.12 mm)/resin film U (film thickness 0.32 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 33 micrometers. For the blocking properties, the measured adhesive strength was 84 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### [Preparation of each resin film]

### (Example 52)

The average film thickness of resin film T (film thickness 0.19 mm) in Example 48 was changed to 0.12 mm to prepare resin film T (film thickness 0.12 mm). Also, the average film thickness of resin film U (film thickness 0.19 mm) in Example 48 was changed to 0.70 mm to prepare resin film U (film thickness 0.70 mm).

### [Preparation of the interlayer film for laminated glass]

Resin film T (film thickness 0.12 mm) and resin film U (film thickness 0.70 mm) described above were used to make a stack of resin film U (film thickness 0.70 mm)/resin film T (film thickness 0.12 mm)/resin film U (film thickness 0.70 mm), in this order, for a total of 3 layers (total film thickness 1.52 mm) and the rest of the process was conducted in the same manner as in Example 1 to obtain the interlayer film for laminated glass. The roughness of the embossment of the obtained interlayer film, measured in the same manner as in Example 1, was 47 micrometers. For the blocking properties, the measured adhesive strength was 68 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 53)

### [Preparation of each resin film]

The average film thickness of resin film T (film thickness 0.26 mm) in Example 49 was changed to 0.34 mm to prepare resin film T (film thickness 0.34 mm). Also, the average film thickness of resin film U (film thickness 0.06 mm) in Example 49 was changed to 0.21 mm to prepare resin film U (film thickness 0.21 mm).

### [Preparation of the interlayer film for laminated glass]

Resin film T (film thickness 0.34 mm) and resin film U (film thickness 0.21 mm) described above were used to make a stack of resin film U (film thickness 0.21 mm)/resin film T (film thickness 0.34 mm)/resin film U (film thickness 0.21 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 22 micrometers. For the blocking properties, the measured adhesive strength was 95 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

### (Example 54)

### [Preparation of each resin film]

Resin film T (film thickness 0.10 mm) in Example 50 was used without modification. The average film thickness of resin film U (film thickness 0.14 mm) in Example 50 was changed to 0.33 mm to prepare resin film U (film thickness 0.33 mm).

### [Preparation of the interlayer film for laminated glass]

Resin film T (film thickness 0.10 mm) and resin film U (film thickness 0.33 mm) described above were used to make a stack of resin film U (film thickness 0.33 mm)/resin film T (film thickness 0.10 mm)/resin film U (film thickness 0.33 mm), in this order, for a total of 3 layers (total film thickness 0.76 mm) and the rest of the process was conducted in the same manner as in Example 1 to obtain the interlayer film for laminated glass. The roughness of the embossment of the obtained interlayer film, measured in the same manner as in Example 1, was 36 micrometers. For the blocking properties, the measured adhesive strength was 79 g/cm, which was low. This indicated that the anti-blocking properties were good and hence workability was superior.

### [Preparation of the laminated glass]

The laminated glass was prepared in the same manner as in Example 1. The laminated glass thus obtained was evaluated for the deaeration and optical distortion. The result was good for both items: i.e. the deaeration was superior and no optical distortion occurred.

The results of Examples 51-54 are summarized in Table 12.

**Table 12**

| | | | Examples | | | |
|---|---|---|---|---|---|---|
| | | | 51 | 52 | 53 | 54 |
| Resin film | T | Type | Modified PVB | Butyl polyacrylate | Methyl polyacrylate | EVA |
| | | Tg (°C) | 7 | 13 | 3 | -18 |
| | | Film thickness (mm) | 0.12 | 0.12 | 0.34 | 0.10 |
| | U | Type | PVB | PVB | PVB | PVC |
| | | Film thickness (mm) | 0.32 | 0.70 | 0.21 | 0.33 |
| Interlayer film | Lamination configuration | | UTU | UTU | UTU | UTU |
| | Number of layers | | 3 | 3 | 3 | 3 |
| | Total film thickness (mm) | | 0.76 | 1.52 | 0.76 | 0.76 |
| | Roughness of the embossment (µm) | | 33 | 47 | 22 | 36 |
| | Blocking properties (g/cm) | | 84 | 68 | 95 | 79 |
| Laminated glass | Deaeration | | Good | Good | Good | Good |
| | Optical distortion | | Good | Good | Good | Good |
| Total assessment | | | ○ | ○ | ○ | ○ |

As described thus far, the use of the interlayer film for laminated glass of the present invention makes it possible to keep the interface between each resin film layer uniform without disruption during the lamination process. Therefore, when manufacturing laminated glass using this interlayer film, optical distortion can be prevented. Also, blocking between the interlayer films can be prevented and superior results can be obtained in terms of workability and deaeration.

## Claims

1. An interlayer film for laminated glass comprising a multi-layer resin film whose outmost resin film has a thickness of 45 micrometers or more to less than 200 micrometers wherein at least one side of said interlayer film has minute embossment with a roughness of 20-40 micrometers.

2. An interlayer film for laminated glass comprising a multi-layer resin film whose outmost resin film has a thickness of 200 micrometers to 720 micrometers wherein at least one side of said interlayer film has minute embossment with a roughness of 20-50 micrometers.

3. An interlayer film for laminated glass of Claim 1 or Claim 2 wherein said multi-layer resin film is a lamination comprising at least one resin film (A) comprising a plasticizer and polyvinyl acetal resin (a) whose acetal group has a carbon number of 6-10 and at least one resin film (B) comprising a plasticizer and polyvinyl acetal resin (b) whose acetal group has a carbon number of 3-4.

4. An interlayer film for laminated glass of Claim 1 or Claim 2 wherein said multi-layer resin film is a lamination comprising at least one resin film (C) comprising a plasticizer and polyvinyl acetal resin (c) for which the acetal group has a carbon number of 4-6 and the average molar fraction of the ethylene group to which the acetyl group is bonded is 8-30 mol% of the total amount of ethylene group in the main chain and at least one resin film (D) comprising a plasticizer and polyvinyl acetal resin (d) for which the acetal group has a carbon number of 3-4 and the average molar fraction of the ethylene group to which the acetyl group is bonded is 4 mol % or less of the total amount of ethylene group in the main chain.

5. An interlayer film for laminated glass of any of the Claims 1 through 4 wherein said multi -layer resin film is a lamination comprising at least two plasticized polyvinyl butyral resin films and the difference between the average degree of polymerization of polyvinyl butyral used in the adjacent resin films is 300 to 4,500.

6. An interlayer film for laminated glass of any of the Claims 1 through 5 wherein said multi -layer resin film is a lamination comprising at least two plasticized polyvinyl butyral resin films and the difference between the plasticizer content in the adjacent resin films is 5 weight parts to 50 weight parts for 100 weight parts of the resin which makes up each resin film.

7. An interlayer film for laminated glass of any of the Claims 1 through 6 wherein said multi -layer resin film is a lamination containing a plasticized polyvinyl butyral resin film for at least the outmost resin film.

8. An interlayer film for laminated glass of any of the Claims 1 through 7 wherein said multi -layer resin film is a lamination comprising at least one layer of a resin film with a glass transition temperature of 15°C or lower.

9. Laminated glass which comprises the interlayer film for laminated glass of any of the Claims 1 through 8 sandwiched between two glass plates.
